# EUROPEAN PATENT SPECIFICATION

(11) **EP 3 911 866 B1**
(45) Date of publication and mention of the grant of the patent: **20.03.2024**
(21) Application number: 20700787.3
(22) Date of filing: 13.01.2020
(51) Int. Cl.: F16C 33/66

(54) **HIGH PRECISION GEAR BOX**
HOCHPREZISIONSGETRIEBE
BOITE DE VITESSE DE PRECISION

(30) Priority: 18.01.2019 DE 102019200645
(43) Date of publication of application: 24.11.2021
(73) Proprietor: Aktiebolaget SKF, 415 50 Göteborg (SE)
(72) Inventor: SCHULZ, Ingo, 97447 Gerolzhofen (DE)
(74) Representative: Kohl, Thomas
(86) International application number: PCT/EP2020/050639
(87) International publication number: WO 2020/148200

(56) References cited:
- EP-A1- 0 164 968
- EP-A1- 3 350 477
- EP-A2- 1 832 766
- DE-A1-102014 104 599
- DE-A1-102016 211 690
- JP-A- 2004 360 738

## Description

The present invention relates to a high precision gear box according to claim 1, the high precision gear box comprising at least one lubricated unit, wherein the lubricated unit comprises a first element and a second element rotating against each other.

High precision gear boxes can be used for example in articulated robots. High precision gear boxes are very compact, providing minimal space for additional functionalities, such as lubrication. Thus, it's difficult to supply bearings within the high precision gear boxes with lubrication. This fact may become even more problematic after an initial oil or grease filling has to a certain extent left the bearing.

In addition, high precision gear boxes are often mounted in a fixed position, for example in axis 1 and 2 of an articulated robot or below the table of a machine tool. These positions may lead to the situation that the lubricant leaves the bearing, for example, due to gravitational or centrifugal forces, and there is no force or energy that is bringing the lubricant back into the bearing.

Thus, in high precision gear boxes comprising units which need to be lubricated, it is necessary to provide a sufficient lubrication of such units. Today, this problem may be solved by oil swamp lubrication. This means that lubricated units are swamped with oil or any other lubricant and it is hoped that this lubricant is sufficient for lubricating the units, for example bearings. EP3350477 A1 discloses a precision planetary gear, for example to be applied to robotic machines for the operation of mechanical arms.

It is thus an object of the present invention to provide a high precision gear box with an improved and sufficient lubrication.

This object is solved by a high precision gear box according to claim 1.

The high precision gear box comprises at least one lubricated unit, wherein the lubricated unit comprises a first element and a second element, wherein the first element and the second element are configured to rotate against each other, wherein a space is formed between the first element and the second element. As the first element and the second element rotate against each other, the space between these elements needs lubrication to facilitate the rotation and to avoid damages at the rotating elements.

As explained above, in the commonly used high precision gear boxes such units were lubricated using a standard lubricant, such as oil. However, as such a lubricant tends to leave the unit due to gravitational or centrifugal forces, the herein described high precision gear box uses a different way of lubricating such units. The space between the first element and the second element is filled with a polymer material which is saturated with oil for lubricating the first and the second element. The advantage of using a polymer material for lubricating the first and the second element is that the polymer material does not leave the space due to gravitational or centrifugal force and thus, the lubrication of the first and the second element may be ensured during the lifetime of the high precision gear box and/or the lifetime of the lubricated unit.

The polymer material is rigid and does not flow out of the lubricated unit. This means that the oil being contained in the polymer material resists to leave the lubricated unit even in unfavorably positions and over time. Thus, there is no need for special retaining mechanisms for keeping the lubricant, i.e. the oil, in the lubricated unit.

The provided high precision gear box provides therefore the advantage that the lubrication of the lubricated unit is present for the lifetime of the high precision gear box and no relubrication is necessary.

Further, commonly used bearings in high precision gear boxes may suffer from particle entry, for example from wear of gearing components. In order to avoid such a particle ingress, the units have until now be separated from the gear space, for example using covers. In the herein described high precision gear box, the entry of particles into the lubricated unit can be avoided, as the polymer material being filled in the space between the first element and the second element may serve as a seal of the space with respect to the environment. This means that particles, which may result from wear of the gear, cannot enter into the lubricated unit. In addition, by filling the complete internal space it's prevented that particle contaminated lubricant from the gear can enter the lubricated unit. The unit don't need to be protected against particle intrusion by a separate component like a cover or seal

According to an embodiment, the polymer material has a porous structure containing micropores, wherein the micropores are filled with the oil.

According to the invention, the lubricated unit is a bearing unit of the high precision gear box, wherein the first element is at least one inner ring and the second element is at least one outer ring, wherein rolling elements are arranged between the inner ring and the outer ring, wherein the space is a rolling chamber formed between the inner ring and the outer ring, wherein the polymer material is configured for lubricating the rolling elements or raceways of the inner ring or the outer ring.

The polymer material may be a polymer matrix saturated with a lubrication oil that completely fills the rolling chamber and may encapsulate a cage and/or the rolling elements. The polymer matrix may contain two to four times more lubrication oil than a commonly used sealed, grease-filled bearing. By containing two to four times more lubricant, the bearings are sufficiently life lubricated. There is no need to implement a replenishment mechanism.

According to a further embodiment, the polymer material is arranged almost contactless to the rolling elements and raceways of the inner ring and the outer ring so that the bearing unit is adapted to rotate freely. The polymer material may be for example molded into the bearing forming very narrow gaps around the rolling elements and raceways so that the bearing is enabled to rotate freely.

As explained above, the polymer material may have a porous structure with many, for example millions of, micropores that hold the lubricating oil retained by surface tension. During rotation of the bearing, oil is released from the material into the narrow gaps between it and the bearing components, thus providing an effective lubrication. This may be further enhanced as an increase of the temperature of the bearing components during rotation pushes the oil of the polymer material toward the surface of the polymer material. This is the case. As the oil contained in the polymer material has a higher coefficient of thermal expansion than the polymer material and because the viscosity of the oil decreases with increasing temperature. When the bearing unit cools down, any excess oil may be reabsorbed back into the polymer material, thus no oil is wasted.

According to an example not part of the invention, the bearing unit comprises a cage being arranged between the inner ring and the outer ring for guiding the rolling elements, wherein the cage is configured to support the polymer material. Thus, according to this embodiment, the cage may be used as an enforcing element for providing a stiffening structure to the polymer material. For example, the polymer material may be formed around the cage.

According to a further example not part of the invention, the cage may be also configured to induce a movement to the polymer material. This may be in particular the case if the polymer material is formed around the cage and thus is moved with a rotation of the cage. Such a movement of the polymer material may enhance the lubrication of the bearing unit.

According to the invention, the cage is realized by the polymer material. In this case, no additional cage is needed but the polymer material may replace the cage and may be configured to provide the functionality of the cage.

Further advantages and preferred embodiments are disclosed in the claims, the description and the figures. It should be further noted that a person skilled in the art may regard or use the presented features individually or combine the presented features as defined in the appended claims.

In the following, the present invention will be described by means of embodiments shown in the figures. The shown embodiments are exemplarily, only, and are not intended to limit the scope of protection. The scope of protection is solely defined by the attached claims.

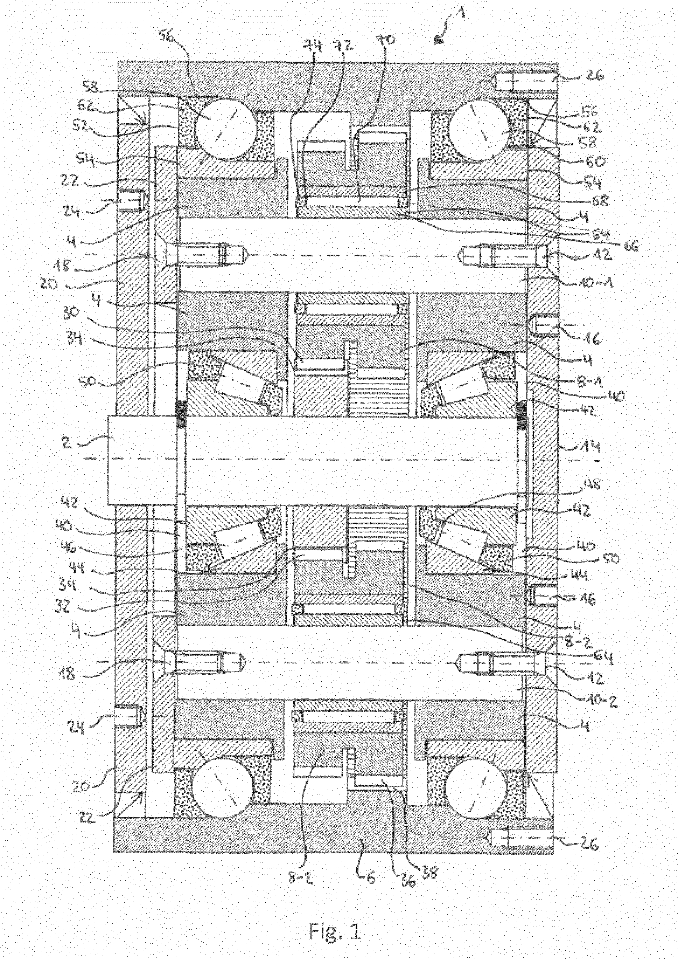

Fig. 1 shows a high precision gear box comprising lubricated bearing units.

In the following same or similar functioning elements are indicated with the same reference numerals.

Fig. 1 shows an example of a high precision gear box 1. The high precision gear box 1 comprises a sun wheel 2, a planetary carrier 4 and a hollow wheel 6. Such a high precision gear box 1 may be used for example as an articulated joint within a robot unit.

The embodiment shown in Fig. 1 is only one potential concept of a high precision gear box. Other concepts are also possible, for example with two hollow wheels.

Depending on the application, the sun wheel 2, the planetary carrier 4 or the hollow wheel 6 may be stationary. In the case shown in Fig. 1, the hollow wheel 6 is stationary.

One side of the high precision gear box 1 represents an input side and the opposite side represents an output side. The input side may be coupled to a motor unit. Via such a motor unit, either the sun wheel 2 or the planetary carrier 4 may be driven.

If the sun wheel 2 is driven, a rotation of the sun wheel 2 is transferred via double planets 8, fixed to the planetary carrier 4, to the planetary carrier 4 and the planets 8 are rolling on the hollow wheel 6.

Around the sun wheel 2, the planetary carrier 4 is arranged. The carrier 4 may have a ring shape and may comprise multiple hubs 10-1, 10-2, which are circumferentially arranged around the sun wheel 2. The hubs 10-1, 10-2 can be attached to the cover 14 via fasteners 12. The cover 14 can be coupled via an attachment 16 with an input or output element.

On the axial opposite side, the planetary carrier 4 is coupled with a cover 22 via fasteners 18. In addition, the high precision gear box 1 may comprise a cover 20, which may be coupled via fasteners 24 with an input or output element. The hollow wheel 6 may be coupled via fasteners 26 with a housing or maybe implemented as a housing.

In order to transfer a movement of the planetary carrier 4 to the sun wheel 2, the planetary carrier 4 comprises double planets 8-1, 8-2. The double planets 8-1, 8-2 each comprise a first gearing 32, which meshes with an external gearing 34 of the sun wheel 2. The double planets 8-1, 8-2 further comprise a second gearing 36, which meshes with an internal gearing 38 of the hollow wheel 6. The rotation of the planetary carrier 4 is transferred to the sun wheel 2 via the first gearings 32. Due to the second gearings 36, the double planets 8-1, 8-2 roll on the hollow wheel 6. The double planets 8-1, 8-2 are also attached to the planetary carrier 4 and mesh directly with the sun wheel 2 and the hollow wheel 6.

For supporting the sun wheel 2 and the planetary carrier 4, the high precision gear box 1 may comprise bearing units 40, 48 between the sun wheel 2 and the planetary carrier 4 as well as between the planetary carrier 4 and the hollow wheel 6. In the shown embodiment, two bearing units 40 are arranged between the sun wheel 2 and the planetary carrier 4. The bearing units 40 each comprise an inner ring 42, which is coupled with the sun wheel 2, and an outer ring 44, which is coupled with the planetary carrier 4. Between the inner ring 42 and the outer ring 44 rolling elements 46, in this case tapered rollers, are arranged. The bearing unit 40 may also comprise different kind of rolling elements or may be a plain bearing. Between the inner ring 42 and the outer ring 44, a rolling chamber 48 is formed. For lubricating the inner ring 42, the outer ring 44 and the rolling elements 46, a polymer material 50 is filled into the rolling chamber 48.

The rolling chamber 48 between a first element, i.e. the inner ring 42, and a second element, i.e. the outer ring 44, is filled with the polymer material 50 which is saturated with oil for lubricating the inner and outer ring 42, 44. The advantage of using a polymer material for lubricating the bearing unit 40 is that the polymer material does not leave the rolling chamber 48 due to gravitational or centrifugal forces and thus, the lubrication of the bearing unit 40 may be ensured during the lifetime of the high precision gear box 1 and/or the lifetime of the bearing unit 40.

The polymer material 50 is rigid and does not flow out of the bearing unit 40. This means that the oil being contained in the polymer material 50 resists to leave the bearing unit 40 also during operation of the high precision gear box 1. Thus, there is no need for special retaining mechanisms for keeping the lubricant, i.e. the oil, in the bearing unit 40.

The polymer material 50 may be in particular a polymer matrix saturated with a lubrication oil that completely fills the rolling chamber 48 and encapsulates the rolling elements 46. The polymer matrix may contain two to four times more lubrication oil than a commonly used sealed, grease-filled bearing. By containing two to four times more lubricant, the bearing unit 40 is sufficiently life lubricated. The polymer material 50 may be arranged contactless to the rolling elements 46 and raceways of the inner ring 42 and the outer ring 44 so that the bearing unit 44 is adapted to rotate freely.

Further, bearing units 52 are arranged between the planetary carrier 4 and the hollow wheel 6. The bearing units 52 each comprise an inner ring 54 and an outer ring 56. The inner ring 54 is coupled with the planetary carrier 4 and the outer ring 56 is coupled with either the hollow wheel 6 or is realized by the hollow wheel 6. Between the inner ring 54 and the outer ring 56, rolling elements 58 are arranged, which may be for example balls. Alternatively, any other kind of rolling elements may be used or the bearing unit 52 may be a plain bearing. As explained with reference to the bearing units 40, also the bearing units 52 have a rolling chamber 60 formed between the inner ring 54 and the outer ring 56. For lubricating the inner ring 54, the outer ring 56 and/or the rolling elements 58, the rolling chamber 60 may be filled with a polymer material 62 as explained with reference to the bearing units 40.

Further, to improve the rotation of the double planets 8-1, 8-2, bearing units 64 may be provided between the double planets 8-1, 8-2 and the hubs 10-1, 10-2. The bearing units 64 each comprise an inner ring 66 and an outer ring 68. The inner ring 66 is coupled with the hubs 10-1, 10-2 and the outer ring 68 is coupled with double planets 8-1, 8-2. Between the inner ring 66 and the outer ring 68, rolling elements 70 are arranged, which may be for example rollers. Alternatively, any other kind of rolling elements may be used or the bearing unit 64 may be a plain bearing. As explained with reference to the bearing units 40, also the bearing units 64 have a rolling chamber 72 formed between the inner ring 66 and the outer ring 68. For lubricating the inner ring 66, the outer ring 68 and/or the rolling elements 70, the rolling chamber 72 may be filled with a polymer material 74 as explained with reference to the bearing units 40.

With the herein described high precision gear box, it is possible to provide an improved lubrication for bearing units or any other kind of lubricated unit within high precision gear boxes. This may be achieved by using a polymer material which is saturated with oil for lubrication.

### List of reference signs

- 1: high precision gear box
- 2: sun wheel
- 4: planetary carrier
- 6: hollow wheel
- 8: double planet
- 10: hub
- 12: fastener
- 14: cover
- 16: attachment to input
- 18: fastener
- 20: cover
- 22: cover
- 24: attachment
- 26: attachment to previous section
- 32: first gearing
- 34: external gearing of the sun wheel
- 36: second gearing
- 38: internal gearing of the hollow wheel
- 40: bearing unit
- 42: inner ring
- 44: outer ring
- 46: rolling elements
- 48: rolling chamber
- 50: polymer material
- 52: bearing unit
- 54: inner ring
- 56: outer ring
- 58: rolling elements
- 60: rolling chamber
- 62: polymer material
- 64: bearing unit
- 66: inner ring
- 68: outer ring
- 70: rolling elements
- 72: rolling chamber
- 74: polymer material

## Claims

1. High precision gear box (1) usable as an articulated joint within a robot unit, the high precision gear box (1) comprising at least one lubricated unit (40, 52, 64), wherein the lubricated unit (40, 52, 64) comprises a first element (42, 54, 66) and a second element (44, 56, 68), wherein the first element (42, 54, 66) and the second element (44, 56, 68) are configured to rotate against each other, wherein a space (48, 60, 72) is formed between the first element (42, 54, 66) and the second element (44, 56, 68), wherein the space (48, 60, 72) is filled with a polymer material (50, 62, 74) being saturated with oil for lubricating the first and the second element (44, 56, 68), wherein the lubricated unit (40, 52, 64) is a bearing unit (40, 52, 64) of the high precision gear box, wherein the first element (42, 54, 66) is at least one inner ring (42, 54, 66) and the second element (44, 56, 68) is at least one outer ring, wherein rolling elements (46, 58, 70) are arranged between the inner ring (42, 54, 66) and the outer ring (44, 56, 68), wherein the space (48, 60, 72) is a rolling chamber (48, 60, 72) formed between the inner ring (42, 54, 66) and the outer ring (44, 56, 68), wherein the polymer material (50, 62, 74) is configured for lubricating the rolling elements (46, 58, 70) or raceways of the inner ring (42, 54, 66) or the outer ring (44, 56, 68), and wherein the polymer material (50, 62, 74) is configured for providing the functionality of a cage for guiding the rolling elements (46, 58, 70).

2. High precision gear box according to claim 1, wherein the polymer material (50, 62, 74) is arranged to seal off the space (48, 60, 72) to the environment.

3. High precision gear box according to any one of the preceding claims, wherein the polymer material (50, 62, 74) has a porous structure containing micro-pores, wherein the micro-pores are filled with the oil.

4. High precision gear box according to any one of the preceding claims, wherein the polymer material (50, 62, 74) is arranged almost contactless to the rolling elements (46, 58, 70) and raceways of the inner ring (42, 54, 66) and the outer ring (44, 56, 68) so that the bearing unit (40, 52, 64) is adapted to rotate freely.

5. High precision gear box according to any one of the preceding claims, wherein the bearing unit (40, 52, 64) comprises a cage being arranged between the inner ring (42, 54, 66) and the outer ring (44, 56, 68) for guiding the rolling elements (46, 58, 70), wherein the cage is configured to support the polymer material (50, 62, 74).

6. High precision gear box according to claim 5, wherein the cage is configured to induce a movement of the polymer material (50, 62, 74).

## Patentansprüche

1. Hochpräzisionsgetriebe (1), das als Gelenk innerhalb einer Robotereinheit verwendbar ist, wobei das Hochpräzisionsgetriebe (1) mindestens eine geschmierte Einheit (40, 52, 64) umfasst, wobei die geschmierte Einheit (40, 52, 64) ein erstes Element (42, 54, 66) und ein zweites Element (44, 56, 68) umfasst, wobei das erste Element (42, 54, 66) und das zweite Element (44, 56, 68) dazu ausgelegt sind, sich gegeneinander zu drehen, wobei ein Zwischenraum (48, 60, 72) zwischen dem ersten Element (42, 54, 66) und dem zweiten Element (44, 56, 68) ausgebildet ist,
wobei der Zwischenraum (48, 60, 72) mit einem Polymermaterial (50, 62, 74) gefüllt ist, das mit Öl gesättigt ist, um das erste und das zweite Element (44, 56, 68) zu schmieren, wobei die geschmierte Einheit (40, 52, 64) eine Lagereinheit (40, 52, 64) des Hochpräzisionsgetriebes ist, wobei das erste Element (42, 54, 66) mindestens ein Innenring (42, 54, 66) ist und das zweite Element (44, 56, 68) mindestens ein Außenring ist, wobei Wälzkörper (46, 58, 70) zwischen dem Innenring (42, 54, 66) und dem Außenring (44, 56, 68) angeordnet sind, wobei der Zwischenraum (48, 60, 72) eine Wälzkammer (48, 60, 72) ist, die zwischen dem Innenring (42, 54, 66) und dem Außenring (44, 56, 68) ausgebildet ist, wobei das Polymermaterial (50, 62, 74) zum Schmieren der Wälzkörper (46, 58, 70) oder Laufflächen des Innenrings (42, 54, 66) oder des Außenrings (44, 56, 68) ausgelegt ist und wobei das Polymermaterial (50, 62, 74) zum Vorsehen der Funktionalität eines Käfigs zum Führen der Wälzkörper (46, 58, 70) ausgelegt ist.

2. Hochpräzisionsgetriebe nach Anspruch 1, wobei das Polymermaterial (50, 62, 74) dazu angeordnet ist, den Zwischenraum (48, 60, 72) zur Umgebung hin abzudichten.

3. Hochpräzisionsgetriebe nach einem der vorstehenden Ansprüche, wobei das Polymermaterial (50, 62, 74) eine poröse Struktur mit Mikroporen aufweist, wobei die Mikroporen mit dem Öl gefüllt sind.

4. Hochpräzisionsgetriebe nach einem der vorstehenden Ansprüche, wobei das Polymermaterial (50, 62, 74) nahezu kontaktlos zu den Wälzkörpern (46, 58, 70) und Laufflächen des Innenrings (42, 54, 66) und des Außenrings (44, 56, 68) angeordnet ist, sodass die Lagereinheit (40, 52, 64) dazu eingerichtet ist, sich frei zu drehen.

5. Hochpräzisionsgetriebe nach einem der vorstehenden Ansprüche, wobei die Lagereinheit (40, 52, 64) einen Käfig umfasst, der zwischen dem Innenring (42, 54, 66) und dem Außenring (44, 56, 68) angeordnet ist, um die Wälzkörper (46, 58, 70) zu führen, wobei der Käfig dazu ausgelegt ist, das Polymermaterial (50, 62, 74) zu tragen.

6. Hochpräzisionsgetriebe nach Anspruch 5, wobei der Käfig dazu ausgelegt ist, eine Bewegung des Polymermaterials (50, 62, 74) auszulösen.

## Revendications

1. Boîte d'engrenages de haute précision (1) utilisable en tant que joint articulé à l'intérieur d'une unité robot, la boîte d'engrenages de haute précision (1) comprenant au moins une unité lubrifiée (40, 52, 64), dans laquelle l'unité lubrifiée (40, 52, 64) comprend un premier élément (42, 54, 66) et un second élément (44, 56, 68), dans laquelle le premier élément (42, 54, 66) et le second élément (44, 56, 68) sont configurés pour entrer en rotation l'un contre l'autre, dans laquelle un espace (48, 60, 72) est formé entre le premier élément (42, 54, 66) et le second élément (44, 56, 68), dans laquelle l'espace (48, 60, 72) est rempli avec un matériau polymère (50, 62, 74) saturé avec de l'huile pour lubrifier le premier et le second élément (44, 56, 68), dans laquelle l'unité lubrifiée (40, 52, 64) est une unité palier (40, 52, 64) de la boîte d'engrenages de haute précision, dans laquelle le premier élément (42, 54, 66) est au moins une bague intérieure (42, 54, 66) et le second élément (44, 56, 68) est au moins une bague extérieure, dans laquelle des éléments roulants (46, 58, 70) sont agencés entre la bague intérieure (42, 54, 66) et la bague extérieure (44, 56, 68), dans laquelle l'espace (48, 60, 72) est une chambre de roulement (48, 60, 72) formée entre la bague intérieure (42, 54, 66) et la bague extérieure (44, 56, 68), dans laquelle le matériau polymère (50, 62, 74) est configuré pour lubrifier les éléments roulants (46, 58, 70) ou des chemins de roulement de la bague intérieure (42, 54, 66) ou de la bague extérieure (44, 56, 68), et dans laquelle le matériau polymère (50, 62, 74) est configuré pour fournir la fonctionnalité d'une cage pour guider les éléments roulants (46, 58, 70).

2. Boîte d'engrenages de haute précision selon la revendication 1, dans laquelle le matériau polymère (50, 62, 74) est agencé pour isoler l'espace (48, 60, 72) de façon étanche de l'environnement.

3. Boîte d'engrenages de haute précision selon l'une quelconque des revendications précédentes, dans laquelle le matériau polymère (50, 62, 74) a une structure poreuse contenant des micropores, dans laquelle les micropores sont remplis avec l'huile.

4. Boîte d'engrenages de haute précision selon l'une quelconque des revendications précédentes, dans laquelle le matériau polymère (50, 62, 74) est agencé presque sans contact avec les éléments roulants (46, 58, 70) et les chemins de roulement de la bague intérieure (42, 54, 66) et de la bague extérieure (44, 56, 68) pour que l'unité palier (40, 52, 64) soit adaptée pour entrer en rotation librement.

5. Boîte d'engrenages de haute précision selon l'une quelconque des revendications précédentes, dans laquelle l'unité palier (40, 52, 64) comprend une cage agencée entre la bague intérieure (42, 54, 66) et la bague extérieure (44, 56, 68) pour guider les éléments roulants (46, 58, 70), dans laquelle la cage est configurée pour supporter le matériau polymère (50, 62, 74) .

6. Boîte d'engrenages de haute précision selon la revendication 5, dans laquelle la cage est configurée pour entraîner un mouvement du matériau polymère (50, 62, 74) .
